# EUROPEAN PATENT SPECIFICATION

(11) **EP 3 262 332 B1**
(45) Date of publication and mention of the grant of the patent: **27.11.2024**
(21) Application number: 16722400.5
(22) Date of filing: 25.02.2016
(51) Int. Cl.: F16L 59/16

(54) **METHOD FOR APPLYING THERMAL INSULATION ON A 3-DIMENSIONAL STRUCTURE**
VERFAHREN ZUM AUFBRINGEN EINER WÄRMEDÄMMUNG AUF EINE DREIDIMENSIONALE STRUKTUR
PROCÉDÉ D'APPLICATION D'UNE ISOLATION THERMIQUE SUR UNE STRUCTURE TRIDIMENSIONNELLE

(30) Priority: 26.02.2015 NL 2014357
(43) Date of publication of application: 03.01.2018
(73) Proprietor: R. Van Den Hanenberg B.V., 5145 PC Waalwijk (NL)
(72) Inventor: SCHMIDT, Tamás, 5145 PC Waalwijk (NL)
(74) Representative: Patent Business B.V.
(86) International application number: PCT/NL2016/050135
(87) International publication number: WO 2016/137323

(56) References cited:
- US-A- 4 295 263
- US-A1- 2003 213 525
- US-A1- 2007 131 300
- ARMACELL: "ArmaFlex Sheet - Flange Application Video", 3 April 2014 (2014-04-03), XP055885064, Retrieved from the Internet <URL:https://www.youtube.com/watch?v=-jxWLZsoJ9k> [retrieved on 20220128]

## Description

### FIELD OF THE INVENTION

The present invention is in the field of thermal insulation and specifically thermal isolation of tubes, flanges, and valve.

### BACKGROUND OF THE INVENTION

Insulation in air conditioning, cool installations, process installation, and heating installation has become more important over the years.

In this respect, thermal insulation relates to a reduction of heat transfer between objects in thermal contact or in range of radiation influence, such as tubing in a maintenance room. Thermal insulation can be achieved with suitable object shapes and materials. The heat transfer (flow) is considered as an inevitable consequence of contact between objects of differing temperature. In order to reduce heat flow, and thus maintaining an object substantially at a same temperature, a thermal insulation is provided. The thermal insulation has a reduced thermal conduction or likewise an insulating action. A thermal conductivity (k) is used to quantify insulating properties. Therein a low thermal conductivity value indicates a high insulating capability (R-value). Other important properties of insulating materials are product density (ρ) and specific heat capacity (c). It is noted that cooling requires much more energy than heating; so maintaining a low temperature is in view of energy consumption quite important.

Heating and cooling systems are sources of heat. They distribute heat through buildings, typically by means of pipe or ductwork. In order to reduce energy consumption insulating these pipes using pipe insulation in unoccupied rooms is required. It further prevents condensation occurring on cold and chilled pipework. Preventing the formation of condensation on pipework is important as moisture contributes to corrosion.

Likewise chemicals, water, air, electrical cables, can run through pipe work.

An example of a document relating to isolation is US 2007/0131300 which recites a pipe insulating fitting cover for insulating a pipe joint, the cover having a first insulating cover for insulating the body of the pipe joint and a second insulating cover for enclosing and insulating the bonnet of the pipe joint. The application recites use of an abrasion apparatus. As a result thereof parts of said cover are abraded to obtain a specific shape. Such abrasion requires a rigid insulation material and a substantial chance of burr formation at the edge of abraded regions. In addition no good insulation is obtained at the edges. It is noted that a curvature of the abrasion apparatus limits the application to specific pipe diameters. Shaping an insulation cover using an abrasive would result in burr formation and an uneven sealing of both the insulation cover itself and the to-be-covered material. The covers used are curved.

For (somewhat) complex piping insulation typically flexible elastomeric foams are used. These foams relate to flexible and closed-cell structures. Examples are rubber foams based on NBR or EPDM rubber. Flexible elastomeric foams exhibit such a high resistance to the passage of water vapor that they do not generally require additional water-vapor barriers. Such high vapor resistance, combined with the high surface emissivity of rubber, allows flexible elastomeric foams to prevent surface condensation formation with comparatively small thicknesses.

As a result, flexible elastomeric foams are widely used on refrigeration and air-conditioning pipework. Flexible elastomeric foams are also used on heating and hot-water systems. However these flexible foams still have to be applied on the structures. Such includes cutting and gluing of parts. If long stretched piping is involved, such cutting and gluing is relatively simple. For complex structures, such as bends, couplings, flanges, T-junctions, and butterfly valves, craftsmanship is required. It is especially relevant that insulation pieces and parts fit well together in order to prevent condensation, mold growth, microbial growth and corrosion. For durability, fire safety, noise reduction and appearance it is important that no burrs are present. Cutting should be performed with relatively high precision and without forming burrs.

Complex structures, such as pipe-couplings, passages through walls and floors, bends, bifurcations, sensors, T-junctions, controllers, closures, vents, locking wheels, supports, suspensions, (butterfly)valves, flanges and branches, are especially difficult to insulate.

In order to reduce noise and to improve fire safety similar considerations as above apply.

A method for applying thermal insulation on a 3-dimensional structure is disclosed in a video on the internet entitled "ArmaFlex® Sheet - Flange Application Video", made available to the public on 3 April 2014 under the URL: https://www.youtube.com/watch?v=-jxWLZsoJ9k

The present invention therefore relates to a method for insulating and products obtained thereby, which overcomes one or more of the above disadvantages, without jeopardizing functionality and advantages.

### SUMMARY OF THE INVENTION

The present invention relates to a method for applying a thermal insulation on a 3-dimensional structure.

Despite that many tasks in nowadays society may be highly automated or machine supported, insulation still largely relates to applying pieces of insulation material by hand. Such is especially the case for large ductworks, having external diameters ranging from 15 mm - 2 m (similar to DN15 to DN2000, such as DN20, DN50, DN80, DN100, DN200, DN250, etc.), typically being used for transport of fluids, like hot and cold water, and gases, like nitrogen and air. Modern ductwork may involve multitudes of 100-10 000 metres or more for a building or building complex. For understanding in a typical day 2000 m of ductwork may be isolated, whereas such an isolation may continue for months. The ductwork is typically formed from a metal, such as stainless steel, aluminum, or from plastics.

The present method makes use of a panel of substantially flat insulation material, such as a foam plate. Preferably the material of the foam plate has an inbuilt, water vapor barrier. The plate is preferably effective in preventing moisture ingress and maintaining a long term thermal efficiency. Preferably a dust and fiber free material is used. Also the material does not rapidly deteriorate and keeps moisture as far from the pipe surface as possible, thereby reducing a risk of expensive under insulation corrosion. The material preferably has a closed cell structure, preferably interconnected closed cells. As such water ingress is limited. The material may vary somewhat in characteristics, e.g. when applied to hot or cold pipe work.

The present flat insulation material has a thickness of 0.5 cm-5 cm, such as 1.0 cm, 1.3 cm, 1.6 cm, 1.9 cm, 2.5 cm, 3.2 cm and 5.0 cm. The insulation material may have an adhesive layer. The thickness of the material is selected in view of insulation properties and temperature gradient between liquid (gas/fluid) in e.g. ductwork and outside temperature.

In a next step one or more 2-dimensional elements from the flat insulation material are formed.

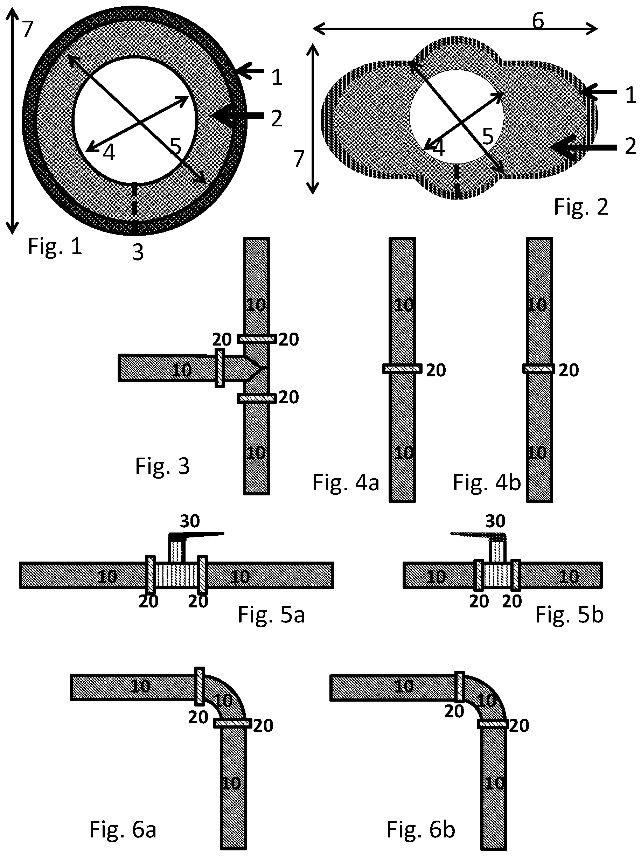

In the context of the present invention such an element is referred to as a two-dimensional element as the element forming substantially has a two dimensional shape or form, such as a square or rectangular form, circle section ellipsoid section, a shape according to figures 1 or 2, etc. The element clearly has the thickness of the insulation material and in that sense it is a three-dimensional element. The one or more 2-dimensional elements together are intended to form a closed structure around the pipe work, or part thereof. As such the elements need to fit perfectly with respect to one and another. It is noted that often, despite standardized measures of pipe work, most of the work is done on location, that is where the pipe work is present.

In a next step the one or more 2-dimensional elements are applied on the 3-dimensional structure. The one or more 2-dimensional elements are typically fixed by applying an adhesive.

The present invention is characterized in that the forming step is motor assisted, preferably an electrical motor, whereas prior art methods typically rely on cutting by hand. In particular burrs are prevented, a perfect fit between parts is achieved, friction or torque are virtually absent, especially in non-straight parts, and appearance is as if the 3-dimensional element is one. The motor assisted forming provides many advantages over the prior art and solves the problems mentioned. Further the amount of work per unit time increases significantly, especially for complex structures, by 10-20%, on top of an improved performance. It has also been found that an amount of waste is reduced, by some 5-20%, depending on a type of structure formed. The present method can be applied with easy, without a need for large investment, at any location, without a need of a complex, big and expensive apparatus.

The motor provides reciprocating motion to a cutting element. It has been found that controlled movement of a cutting element, especially in a reciprocating manner, provides cutting faces with hardly any or no burrs, having a required angle, that can be applied with ease onto 3-dimensional structures.

Thereby the present invention provides a solution to one or more of the above mentioned problems and drawbacks, without jeopardizing beneficial effects. Advantages of the present description are detailed throughout the description.

### DETAILED DESCRIPTION OF THE INVENTION

The present invention relates to a method for applying a thermal insulation on a 3-dimensional structure according to claim 1. The 3-dimensional structure typically relates to elements of ductwork and piping, such as pipe-couplings, passages through walls and floors, bends, bifurcations, sensors, T-junctions, controllers, closures, vents, locking wheels, supports, suspensions, (butterfly)valves, flanges and branches. The outward extending connecting section may also relate to a sensor, a controller, a closure, etc.; the term indicates such extensions in general.

According to the invention, the forming is performed at a constant angle with respect to the 2-dimensional element. Such is particularly difficult without assistance of a motor. It is preferred to use an electrical motor, which may be attached to the power grid or may run on batteries. According to the invention, the motor is in a fixed position, in view of the constant angle. As such as variation of angles is limited to less than ± 5°/m. In a best mode the variation of angles is limited to less than ± 2°/m, in other words virtually constant.

In an example of the present method the angle is selected from 85-95° (perpendicular), 40-50°, 25-35° and 55-65°, preferably 90°, 60°, 45° and 30°. In other words a selection can be made between a substantially perpendicular cut, and cuts under specific angles. According to the invention, the present motor is fixed at an angle; by fixing even more precise cutting is provided. Also fixing is found to prevent burr forming.

In an example of the present method a mold is used to form the one or more 2-dimensional elements. Such is especially suited for complex structures and for structures with dimensions that occur regularly, such as a coupling element. The mold is preferably made of a solid nonabrasive material. As an alternative the cutting blade may be positioned at a fixed and indicated position, e.g. at a certain distance from a point taken as origin. Then the two dimensional element may be rotated, creating a circular form. The two dimensional element may be pressed against a supporting structure.

In an example of the present method the 2-dimensional elements comprise a first cylindrical like element (1) having a first radius, at least one substantially flat element , wherein the first cylindrical like element and the at least one substantially flat element are connected at an angle of about 90°. The cutting is preferably performed at an angle of 45°. The 3-dimensional structure may relate to a coupling element.

In an example of the present method the flat insulation material is rotated. It has been found that rotating the insulation material, especially when the material is fixed to a supporting structure, provides good results in terms of form requirements, cutting angle, etc.

In an example of the present 3-dimensional element the element comprises a first cylindrical like element having a first inner radius and an outer radius, two substantially flat elements, wherein the first cylindrical like element and the two flat elements are connected at an angle of 90° (within given accuracy), such as for a coupling element. Note that the edges of the elements and may be selected from e.g. 85-95° (perpendicular), 40-50°, 25-35° and 55-65°. In a further example thereof, especially suited for couplings having non-equal width and height, the 3-D element has a somewhat more broadened horizontal section, and a somewhat less broadened vertical section.

The ratio of the length of the sections is typically from 1-3.

In an example the present method is for insulating a coupling element between a first tube and a second tube, optionally comprising one or more incisions (3) for attaching the 2-dimensional element to the coupling element. As such the 2-dimensional element can be pre-fabricated, e.g. in a first location, and be applied directly to a coupling element, e.g. in a second location. Upon application an adhesive is preferably applied to the one or more incisions, in order to fully close the insulation.

In an example of the present method, edges of the flat insulation material have an angle of 45°. As such two (or more) parts can be adhered well.

The present invention also relates to a use of the present method in the thermal insulation of a 3-dimensional structure, such as for one or more of maintaining a relatively low temperature, maintaining a relatively high temperature, such as inside a tubing structure, providing fire safety, limiting corrosion, noise insulation, preventing mold growth, and preventing microbial growth.

The invention is further detailed by the accompanying figures, which are exemplary and explanatory of nature and are not limiting the scope of the invention. To the person skilled in the art it may be clear that many variants, being obvious or not, may be conceivable falling within the scope of protection, defined by the present claims.

### FIGURES

The invention although described in detailed explanatory context may be best understood in conjunction with the accompanying figures.
Fig. 1-2 show cross sections of a coupling structure.
Figs. 3-6 show typical ductwork sections.
Fig. 7 shows an insulation element for a coupling element.
Fig. 8 shows an example of an insulated tube section comprising a coupling element.

### DETAILED DESCRIPTION OF THE FIGURES

In the figure:
- 1: vertical flat element
- 2: flat horizontal element
- 3: incision (optional)
- 4: first inner diameter
- 5: outer diameter
- 6: broadened horizontal section
- 7: less broadened vertical section
- 10: tube section
- 20: coupling element
- 30: butterfly valve

In figure 1 a cross section of coupling element is shown. Therein a first flat (horizontal) element 2, positioned on top (or likewise on the bottom) of a 3-dimensional coupling element, is adhered to a vertical flat element 1, forming (part of the) side insulation of the coupling element. Further an incision 3 is provided. Preferably the insulation is made of Armaflex^{®}, such as 13 or 19 mm thick Armaflex^{®}. The coupling element is substantially circular, having an inner diameter 4 (2*radius) and an outer diameter 5. The outer diameter 5 plus two times a thickness of the insulation material is equal to an outer total diameter 7.

In figure 2 a cross section of coupling element is shown. Therein a first flat (horizontal) element 2, positioned on top (or likewise on the bottom) of a 3-dimensional coupling element, is adhered to a vertical flat element 1, forming (part of the) side insulation of the coupling element. Further an incision 3 is provided. Preferably the insulation is made of Armaflex^{®}, such as 13 or 19 mm thick Armaflex^{®}. The coupling element is somewhat irregular, having an inner diameter 4 (2*radius), an outer diameter 5, a somewhat more broadened horizontal section 6, and a somewhat less broadened vertical section 7. Such may be due to the inherent structure of the coupling element itself.

Figures 1 and 2 effectively show half of a 3-dimensional structure intended for insulating a coupling element.

Figs. 3-6 show a T-section, a rectangular section, a rectangular section comprising a valve, and a bend section, respectively. Therein at least two tube sections 10 are shown, at least one coupler (figs. 3, 4a, 5a, 6a) or likewise a weld (figs. 4b, 5b and 6b, fig. 3 may have a not shown weld equivalent), and a butterfly valve. The couplers may relate to groove couplers, such as NW125 groove couplers.

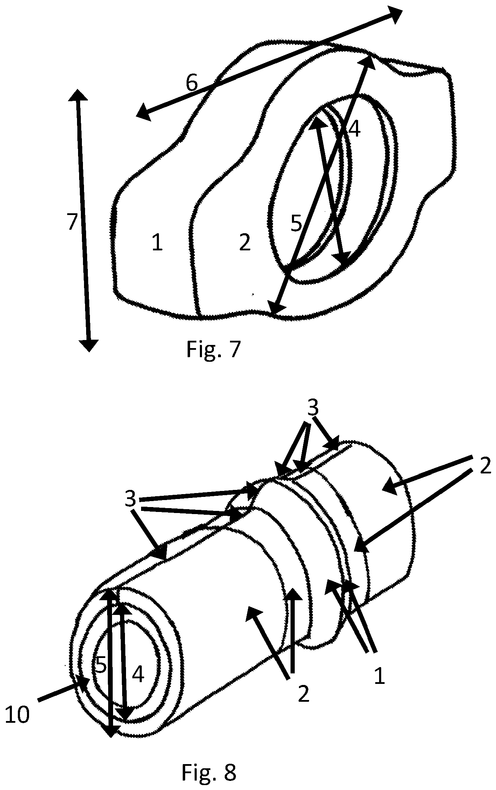

Fig. 7 shows an insulation element for a coupling element.

Fig. 8 shows an example of an insulated tube section comprising a coupling element.

For both figures 7 and 8 a superior appearance is achieved, having smooth edges, good insulation, good adherence, etc. To the person skilled in art it is obvious that the above given embodiments of the method represent only a few of the many possible variations in which method according to the invention may be executed. Therefore the embodiments given here must be understood as an elucidation to the appended claims without limiting the scope of the invention. Within the protective scope defined by the appended claims, numerous variations are conceivable.

## Claims

1. Method for applying a thermal insulation on a 3-dimensional structure (10, 20, 30), the 3-dimensional structure comprising at least two individual tube sections (10) and an outward extending connecting section (20), the thermal insulation having a thickness of 0.5 cm-5 cm, wherein the method consists of the steps of
- providing a substantially flat panel of insulation material, wherein the method is **characterized by** the steps of
- forming one or more 2-dimensional elements (1, 2) from the flat insulation material, wherein forming is assisted by a motor that provides reciprocating motion to a cutting element,
- applying the one or more 2-dimensional elements on the 3-dimensional structure,
wherein the forming is performed at a constant angle with respect to the 2-dimensional element, by having the motor in a fixed position in view of the constant angle.

2. Method according to claim 1, wherein the angle is selected from 85-95°, 40-50°, 25-35° and 55-65°.

3. Method according to any of the preceding claims, wherein a mold is used to form the one or more 2-dimensional elements.

4. Method according to any of the preceding claims, wherein the flat insulation material is rotated during forming.

5. Method according to any of the claims 1-4, further comprising insulating a coupling element between a first tube and a second tube, comprising one or more incisions (3) for attaching the 2-dimensional element to the coupling element.

6. Method according to any of the claims 1-5, wherein edges of the flat insulation material have an angle of 45° or 90°.

7. Method according to any of the claims 1-6, wherein the insulation material is a foam.

8. Method according to any of the claims 1-7, wherein the insulation material has an inbuilt, water vapor barrier.

9. Method according to any of the claims 1-8, wherein the insulation material is a dust and fiber free material

10. Method according to any of the claims 1-9, wherein the insulation material has a closed cell structure, preferably interconnected closed cells.

11. Use of a method according to any of claims 1-10 in thermal insulation of a 3-dimensional structure, the 3-dimensional structure comprising at least two individual tube sections and an outward extending connecting section, the thermal insulation having a thickness of 0.5 cm-5 cm, such as for one or more of maintaining a relatively low temperature, maintaining a relatively high temperature, providing fire safety, limiting corrosion, noise insulation, preventing mold growth, and preventing microbial growth.

## Patentansprüche

1. Verfahren zum Aufbringen einer Wärmedämmung auf eine dreidimensionale Struktur (10, 20, 30), wobei die dreidimensionale Struktur mindestens zwei einzelne Rohrabschnitte (10) und einen sich nach außen erstreckenden Verbindungsabschnitt (20) umfasst, wobei die Wärmedämmung eine Dicke von 0,5 cm bis 5 cm aufweist,
das Verfahren besteht aus den folgenden Schritten
- Bereitstellen einer im wesentlichen flachen Platte aus Isoliermaterial,
wobei das Verfahren **gekennzeichnet ist durch** die Schritte
- Formen eines oder mehrerer 2-dimensionaler Elemente aus dem flachen Isoliermaterial, wobei das Formen durch einen Motor unterstützt wird, der eine Hin- und Herbewegung für ein Schneidelement bereitstellt,
- Aufbringen des einen oder der mehreren 2-dimensionalen Elemente auf die 3-dimensionale Struktur,
wobei das Formen in einem konstanten Winkel in Bezug auf das 2-dimensionale Element durchgeführt wird, indem der Motor in einer festen Position im Hinblick auf den konstanten Winkel gehalten wird.

2. Verfahren nach Anspruch 1, wobei der Winkel aus 85-95°, 40-50°, 25-35° und 55-65° ausgewählt wird.

3. Verfahren nach einem der vorhergehenden Ansprüche, bei dem eine Form zum Formen des einen oder der mehreren zweidimensionalen Elemente verwendet wird.

4. Verfahren nach einem der vorhergehenden Ansprüche, wobei das flache Isoliermaterial während des Formens gedreht wird.

5. Verfahren nach einem der Ansprüche 1 bis 4, wobei ferner ein Kopplungselement zwischen einem ersten Rohr und einem zweiten Rohr isoliert wird, das einen oder mehrere Einschnitte (3) zum Befestigen des 3-dimensionalen Elements an dem Kopplungselement aufweist.

6. Verfahren nach einem der Ansprüche 1-5, wobei die Kanten des flachen Isoliermaterials einen Winkel von 45° oder 90° aufweisen.

7. Verfahren nach einem der Ansprüche 1-6, wobei das Isoliermaterial ein Schaumstoff ist.

8. Verfahren nach einem der Ansprüche 1-7, wobei das Isoliermaterial eine eingebaute Wasserdampfsperre aufweist.

9. Verfahren nach einem der Ansprüche 1-8, wobei das Isoliermaterial ein staub- und faserfreies Material ist.

10. Verfahren nach einem der Ansprüche 1-9, wobei das Isoliermaterial eine geschlossene Zellstruktur, vorzugsweise miteinander verbundene geschlossene Zellen, aufweist.

11. Verwendung des Verfahrens nach einem der Ansprüche 1-10 bei der thermischen Isolierung einer dreidimensionalen Struktur, wobei die dreidimensionale Struktur mindestens zwei einzelne Rohrabschnitte und einen sich nach außen erstreckenden Verbindungsabschnitt umfasst, wobei die thermische Isolierung eine Dicke von 0,5 cm bis 5 cm aufweist, beispielsweise zur Aufrechterhaltung einer relativ niedrigen Temperatur, zur Aufrechterhaltung einer relativ hohen Temperatur, zur Gewährleistung der Brandsicherheit, zur Begrenzung der Korrosion, zur Geräuschdämmung, zur Vorbeugung von Schimmelwachstum und zur Verhinderung von mikrobiellem Wachstum.

## Revendications

1. Procédé d'application d'une isolation thermique sur une structure tridimensionnelle (10, 20, 30), la structure tridimensionnelle comprenant au moins deux sections de tube individuelles (10) et une section de raccordement s'étendant vers l'extérieur (20), l'isolation thermique ayant une épaisseur de 0,5 cm à 5 cm,
la méthode consiste à
- fournir un panneau de matériau isolant sensiblement plat,
La méthode est **caractérisée par** les étapes suivantes
- former un ou plusieurs éléments bidimensionnels à partir du matériau isolant plat, le formage étant assisté par un moteur qui fournit un mouvement de va-et-vient à un élément de coupe,
- appliquer un ou plusieurs éléments bidimensionnels sur la structure tridimensionnelle,
l'application d'un ou de plusieurs éléments bidimensionnels sur la structure tridimensionnelle, le formage étant effectué à un angle constant par rapport à l'élément bidimensionnel, le moteur étant placé dans une position fixe compte tenu de l'angle constant.

2. Méthode selon la revendication 1, dans laquelle l'angle est choisi parmi 85-95°, 40-50°, 25-35° et 55-65°.

3. Méthode selon l'une des revendications précédentes, dans laquelle un moule est utilisé pour former un ou plusieurs éléments bidimensionnels.

4. Procédé selon l'une quelconque des revendications précédentes, dans lequel le matériau isolant plat est tourné pendant le formage.

5. Procédé selon l'une quelconque des revendications 1 à 4, comprenant en outre l'isolation d'un élément de couplage entre un premier tube et un second tube, comprenant une ou plusieurs incisions (3) pour fixer l'élément tridimensionnel à l'élément de couplage.

6. Méthode selon l'une des revendications 1 à 5, dans laquelle les bords du matériau isolant plat présentent un angle de 45° ou 90°.

7. Méthode selon l'une des revendications 1 à 6, dans laquelle le matériau isolant est une mousse.

8. Méthode selon l'une des revendications 1 à 7, dans laquelle le matériau isolant est doté d'une barrière intégrée contre la vapeur d'eau.

9. Méthode selon l'une des revendications 1 à 8, dans laquelle le matériau isolant est un matériau exempt de poussière et de fibres.

10. Méthode selon l'une des revendications 1 à 9, dans laquelle le matériau isolant a une structure cellulaire fermée, de préférence des cellules fermées interconnectées.

11. Utilisation de la méthode selon l'une des revendications 1 à 10 dans l'isolation thermique d'une structure tridimensionnelle, la structure tridimensionnelle comprenant au moins deux sections de tubes individuels et une section de connexion s'étendant vers l'extérieur, l'isolation thermique ayant une épaisseur de 0,5 cm à 5 cm, par exemple pour un ou plusieurs des objectifs suivants : maintenir une température relativement basse, maintenir une température relativement élevée, assurer la sécurité incendie, limiter la corrosion, isoler du bruit, empêcher la croissance des moisissures et empêcher la croissance microbienne.
